(19) Europäisches Patentamt
European Patent Office
Office européen des brevets

(11) Numéro de publication: **0 418 125 A1**

(12) # DEMANDE DE BREVET EUROPEEN

(21) Numéro de dépôt: **90402460.1**

(22) Date de dépôt: **07.09.90**

(51) Int. Cl.5: **C22B 59/00**, C01F 17/00, C22B 3/26, C22B 3/28, C22B 3/32, C22B 3/38

(30) Priorité: **13.09.89 FR 8911989**

(43) Date de publication de la demande: **20.03.91 Bulletin 91/12**

(84) Etats contractants désignés: **AT DE FR GB**

(71) Demandeur: **RHONE-POULENC CHIMIE**
**25, quai Paul Doumer**
**F-92408 Courbevoie Cédex(FR)**

(72) Inventeur: **Cailly, Francinet**
**42 à 52 rue Villiers de l'Isle Adamn**
**F-75020 Paris(FR)**
Inventeur: **Mottot, Yves**
**14, Avenue Salvador Alliendé**
**F-92390 Tremblay en France(FR)**

(74) Mandataire: **Esson, Jean-Pierre et al**
**RHONE-POULENC CHIMIE Service Brevets Chimie 25, quai Paul Doumer**
**F-92408 Courbevoie Cedex(FR)**

(54) **Procédé de traitement de minerais contenant des terres rares.**

(57) L'invention concerne un procédé d'attaque d'un minerai contenant des terres rares. Ce procédé consiste en une attaque sulfurique d'un minerai dans le réacteur 1 puis reprise par une solution de nitrate de calcium en 3, et après élimination des insolubles en 5, récupération des terres rares par un procédé d'extraction liquide/liquide dans les batteries 6a, 6b.

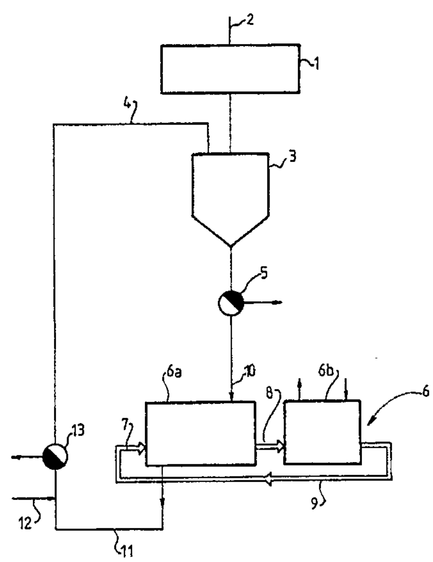


EP 0 418 125 A1

## PROCEDE DE TRAITEMENT DE MINERAIS CONTENANT DES TERRES RARES

La présente invention concerne un procédé de traitement d'un minerai contenant des terres rares.

Actuellement, les principaux minerais de terres rares exploités sont ceux qui contiennent des minéraux porteurs de terres rares tels que monazite, bastnaésite et xénotime. Il existe de nombreux autres minerais dont l'exploitation et le traitement ne sont pas actuellement rentables.

Lorsque le minerai a une teneur faible ou moyenne en éléments terres rares, il est nécessaire de procéder à son enrichissement en le soumettant à un traitement physique : gravimétrie, flottation ou séparation magnétique. Un tel procédé qui s'ajoute au traitement chimique nécessaire pour récupérer les éléments terres rares, peut s'avérer coûteux et grève l'économie du procédé.

Un des objectifs de la présente invention est de fournir un procédé économique de récupération de terres rares à partir du minerai les contenant selon un procédé susceptible notamment d'éviter ou de limiter l'enrichissement préalable dudit minerai.

Un autre objectif de la présente invention est de disposer d'un procédé convenant au traitement de tout type de minerais ou de résidus contenant des éléments terres rares, quelle que soit leur concentration.

L'invention a également pour objectif de fournir un procédé convenant plus particulièrement au traitement des minerais comprenant des composés fluorés de terres rares tels que les minerais de Bastnaésite qui contiennent des fluorocarbonates de terres rares, permettant ainsi d'éliminer le fluor sans nécessité des traitements thermiques à haute température.

A cet effet, l'invention propose un procédé de traitement de minerais contenant des composés de terres rares comprenant les étapes suivantes :

(i) attaque du minerai par de l'acide sulfurique

(ii) addition à la masse d'attaque, en présence d'eau, d'un composé comprenant un cation qui forme avec l'anion sulfate un composé insoluble et un anion formant avec les terres rares un composé soluble ;

(iii) à récupérer les terres rares par extraction liquide/liquide entre la phase aqueuse contenant les sels de terres rares et une phase organique contenant un agent d'extraction des terres rares, insoluble dans l'eau, puis re-extraction des terres rares de la phase organique.

Avantageusement, les insolubles sont séparés de la phase aqueuse avant l'extraction liquide/liquide des terres rares.

Ainsi, la solubilisation des terres rares est réalisée par échange de l'anion sulfate avec un autre anion, comme par exemple les anions nitrate, halogénure, acétate, perchlorate.

Selon une autre caractéristique de l'invention, le composé ajouté à l'étape (ii) est avantageusement un nitrate ou un chlorure tel qu'un nitrate ou chlorure d'alcalino-terreux ou analogue.

Le composé préféré de l'invention, notamment d'un point de vue économique est le nitrate de calcium, ou le chlorure de calcium.

Le composé est mis en oeuvre dans une quantité suffisante pour obtenir une dissolution complète des terres rares.

La solution de terres rares peut être séparée des insolubles par tout procédé classique de séparation solide / liquide, tel que par exemple décantation, filtration, centrifugation ou analogue.

La séparation des terres rares est effectuée par extraction liquide-liquide entre la phase aqueuse contenant les sels de terres rares et une phase organique contenant un agent d'extraction insoluble dans l'eau, puis re-extraction des terres rares de la phase organique.

L'agent d'extraction mis en oeuvre dans le procédé de l'invention peut être choisi parmi tous les agents d'extraction présentant une sélectivité pour les terres rares.

L'agent d'extraction mis en oeuvre peut être choisi parmi la classe des agents d'extraction anioniques, celle des agents d'extraction solvatants ou celle des agents d'extraction cationiques, ou un mélange de ceux-ci.

Les agents d'extraction anioniques mis en oeuvre sont notamment les composés organiques à longue chaîne comportant des fonctions amines.

Les chaînes hydrocarbonées de ces composés ayant de préférence, entre environ 5 et 20 atomes de carbone.

Parmi ceux-ci on peut citer par exemple :

- les amines tertiaires et notamment les produits commercialisés sous les marques Alamine 336 et Adogen 364 qui sont constitués d'amines tertiaires de formule $R_3N$ dans laquelle le radical hydrocarboné R a de 8 à 10 atomes de carbone,
- les nitrates d'ammonium quaternaires et en particulier les produits dérivés des produits commercialisés sous les marques Adogen 464 et Aliquat 336 qui sont constitués de sels d'ammonium quaternaires de

formule :

$[R_3N - CH_3]^{+}\ Cl^{-}$

dans laquelle le radical hydrocarboné R a de 8 à 10 atomes de carbone.

Les agents d'extraction cationiques mis en ouvre sont notamment les acides organo-phosphorés ; les acides carboxyliques ; les $\beta$ -dicétones.

Parmi ceux-ci, on citera :

- les acides organo-phosphorés de formule générale :

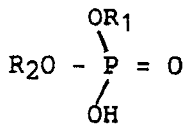 ou 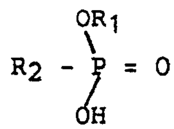 ou 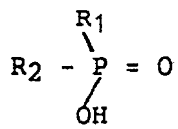

dans lesquelles $R_1$ et $R_2$ représentent des radicaux hydrocarbonés aliphatiques ou aromatiques tels que le nombre total d'atomes de carbone de ces groupements soit au moins égal à 10. On préfère mettre en oeuvre l'acide di(éthyl-2 hexyl) phosphorique et l'acide bis (éthyl-2 hexyl) phosphonique ;

- les acides carboxyliques commercialisés par la Société SHELL Chemicals sous la dénomination "VERSATIC" et qui répondent à la formule générale :

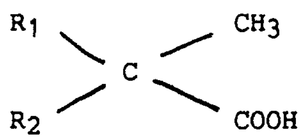

dans laquelle $R_1$ et $R_2$ sont des radicaux hydrocarbonés substitués ou non, et, en particulier, l'acide "VERSATIC 10" (marque déposée) dérivé du procédé SHELL de carboxylation d'oléfines en $C_9$ et pour lequel $R_1$ et $R_2$ sont des radicaux hydrocarbonés dont la somme des atomes de carbone des deux radicaux est égale à 7;

Les agents d'extraction anioniques ou cationiques peuvent être utilisés pour extraire et séparer les terres rares à partir de la solution aqueuse issue de l'étape (ii) de reprise. Toutefois, dans ce cas, il est nécessaire d'effectuer une pré-neutralisation à l'aide d'une base de préférence une base dont le cation est identique à celui du composé ajouté à l'étape (ii).

Les agents d'extraction solvatants mis en oeuvre sont notamment des composés organophosphorés neutres substantiellement insolubles dans l'eau et choisis parmi les quatres classes suviantes :

les phosphates 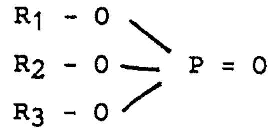 (I)

les phosphonates 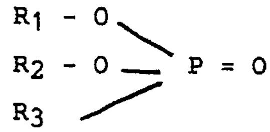 (II)

les phosphinates 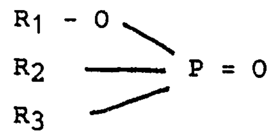 (III)

les oxydes de phosphine 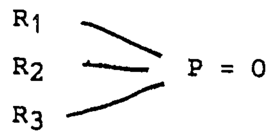 (IV)

dans les formules (I) à (IV), $R_1$, $R_2$ et $R_3$ représentent des radicaux hydrocarbonés tels que des radicaux aliphatiques, cycloaliphatiques et/ou aromatiques.

Lesdits radicaux peuvent contenir de 1 à 18 atomes de carbone mais de préférence, au moins l'un des radicaux doit avoir au moins 4 atomes de carbone.

Les agents d'extraction de formule (I) à (IV) peuvent être utilisés seuls ou en mélange.

Parmi ces composés, on met notamment en oeuvre selon l'invention, ceux qui sont disponibles industriellement comme le tri-n-butylphosphate (TBP), le tri-isobutylphosphate (TIBP), le dibutylbutylphosphonate (DBBP), le di-(éthyl-2 hexyl) éthyl-2 hexylphosphonate (DEHEHP), l'oxyde de tri-n-octylphosphine (TOPO).

Dans le procédé de l'invention, on fait appel de préférence au tributylphosphate ou au dibutylbutylphosphonate.

Les agents d'extraction solvatants peuvent être utilisés pour extraire et séparer les terres rares à partir de la solution aqueuse recueillie après l'étape (ii). Dans ce cas, cette solution doit comprendre comme anion, l'anion nitrate. Ainsi, le composé ajouté à cette étape (ii) pour effectuer la reprise de la masse d'attaque est un nitrate, par exemple le nitrate de calcium.

De préférence, la solution aqueuse issue de l'étape (ii) a une concentration en ions nitrate comprise entre 4N et 9N.

La phase organique selon le procédé de l'invention contient éventuellement outre l'agent d'extraction, un diluant organique. Comme diluants susceptibles d'être utilisés, on peut mettre en oeuvre ceux habituellement mis en oeuvre pour réaliser des opérations d'extraction liquide-liquide. Parmi ceux-ci, on peut citer les hydrocarbures aliphatiques comme par exemple, le dodécane et les coupes pétrolières du type kérosène, les hydrocarbures aromatiques comme par exemple, les coupes pétrolières constituées de mélange d'alkylbenzènes notamment les coupes du type Solvesso commercialisées par la Société EXXON.

On peut également utiliser un mélange de ces diluants.

On fait appel, de préférence, aux coupes pétrolières du type kérosène.

La proportion de l'agent d'extraction dans la phase organique varie avec l'agent d'extraction dans de larges limites.

Sa concentration peut varier de 5 % en volume lorsque l'agent d'extraction est en solution dans un diluant jusqu'à 100 % lorsque l'agent est utilisé pur.

Une proportion comprise entre 50 et 80 % en volume est avantageuse lorsque l'on fait appel au tributylphosphate ou au dibutylbutylphosphonate, agents d'extraction préférés de l'invention.

La phase organique selon le procédé de l'invention peut également contenir divers agents modifieurs dont un des buts essentiels est d'améliorer les propriétés hydrodynamiques du système sans altérer les propriétés complexantes de l'agent d'extraction. Parmi les composés convenant bien, on peut citer notamment, les composés à fonction alcool et, en particulier, les alcools lourds dont le nombre d'atomes de

carbone est compris entre 4 et 15. Une proportion pouvant atteindre 20 % en volume rapportée à la phase organique est généralement favorable.

On opère la séparation de la ou des terres rares en opérant à contre-courant sur plusieurs étages théoriques d'extraction, chaque étage étant constitué par l 'opération mélange-décantation.

On met en contact la phase aqueuse et la phase organique à une température qui ne présente aucun caractère critique ; elle est choisie généralement entre 15° C et 65° C et est le plus souvent comprise entre 20° C et 50° C.

L'étape de séparation conduit à l'obtention d'une part, d'une solution aqueuse épurée en terres rares et contenant le ou les éléments non extraits de la solution d'attaque, et d'autre part une phase organique contenant les terres rares.

On effectue ensuite une étape de réextraction des terres rares contenues dans la phase organique.

On sépare les terres rares extraites dans la phase organique par mise en contact de cette dernière avec de l'eau ou éventuellement une solution diluée d'acide nitrique; inférieure à environ 0,3 N.

A partir de la solution aqueuse de nitrates de terres rares récupérées à l'étape de réextration, il est possible de précipiter les terres rares sous forme de leur hydroxyde à l'aide d'une solution basique à un pH voisin de 8.

La solution aqueuse épurée en terres rares, recueillie après extraction par le solvant organique est avantageusement recyclé à l'étape (ii) comme solution pour effectuer la reprise de la masse d'attaque. En effet, cette solution contient l'anion formant un sel soluble avec les terres rares. Il sera alors suffisant d'ajuster la teneur en cation, par exemple calcium, dans cette solution de recyclage, par addition par exemple de chaux pour obtenir une solution de reprise de la masse d'attaque correcte.

Cette caractéristique présente un avantage important d'un point de vue économique et de rejet des effluents. En effet, le recyclage de la solution obtenue après extraction des terres rares dans l'étape (iii) permet de diminuer voir même de supprimer les effluents liquides et notamment les rejets de composés nitrates. Ainsi, dans le cas de l'utilisation de chaux et de nitrate de calcium, les rejets seront constitués essentiellement de sulfate de calcium et les réactifs consommés seront essentiellement de la chaux et de l'acide sulfurique.

Un autre avantage de l'invention réside dans le fait que le procédé permet de traiter tout type de minerais ou de résidus contenant des terres rares.

Le procédé de l'invention peut s'appliquer sur tout type de minerais et, plus particulièrement, aux minerais ayant une faible teneur en terres rares.

Il est évident que l'on ne sortira pas du cadre de la présente invention en opérant sur des concentrés de minerais dont le procédé d'obtention est bien connu, par exemple par enrichissement à l'aide de techniques physiques, broyage et flottation et/ou concentration par gravité sur des tables à secousses et/ou par séparation magnétique et/ou tout autre technique physique ou chimique.

Il est également possible de mettre en oeuvre un minerai ayant subi un prétraitement thermique.

Dans le cas de minerais pauvres en terres rares, on fait appel, de préférence, à un minerai ayant une gangue en partie insoluble dans l'acide sulfurique et l'on peut citer le quartz et les silicates, la magnétite, l'anatase, le rutile, l'ilménite, les grenats et les zircons.

Comme minerais convenant bien à la mise en oeuvre de l'invention, on peut mentionner les minerais dont les porteurs de terres rares sont des phosphates, des fluocarbonates, des carbonates ou des silicates.

A titre d'exemples de minerais, on peut citer les minerais suivants dont on a ci-après précisé la teneur pondérale moyenne en terres rares exprimée en oxydes de terres rares ;

- les minerais de type phosphate tels que les apatites où les terres rares sont incluses dans le réseau de phosphate de calcium $Ca_5 (PO_4)_3$ (F, Cl, OH) (10 %) ; la rhabdophanite $TRPO_4$, $H_2O$ (60 %) ; la monazite $TRPO_4$ (65 %).

La churchite $TRPO_4$, $H_2O$ (50 %), les terres rares étant essentiellement des terres rares yttriques ; la famille des crandallites, par exemple la florencite $TRAl_3 (PO_4)_2(OH)_6$ (30 %).

- les minerais de type fluocarbonate, par exemple la bastnaésite $TRCO_3F$ (75 %), la synchisite $TRCa(CO_3)_2F$ (52 %) ;
- les minerais de type carbonate, notamment le lanthanite $TR_2(CO_3)_3$, $8H_2O$ (55 %) ;
- les minerais de type silicate, notamment l'allanite $(TRCa)_2(FeAlMg)_3(SiO_4)_3OH$ (60 %), la britholite $(TR_6Ca_4)Si_6O_{24} (OH)_2$ et l'Eudialyte $(Na,Ca)_5(Zn,Fe,M)Si_6O_{17}(O,OH,Cl)$.

Le procédé de l'invention convient tout à fait bien pour le traitement des minerais du type fluorocarbonate.

En effet, le fluor contenu dans le minerai est libéré lors de l'attaque sulfurique sous forme notamment d'acide fluorhydrique.

Il est également possible de traiter selon le procédé de l'invention, toute forme de résidu qu'il soit sous

forme solide ou liquide.

C'est ainsi que l'on peut mettre en oeuvre des résidus contenant des terres rares sous forme salifiée (phosphates, carbonates ou sulfates) ou de résidus (poudres, copeaux, fragments, lingots, poussières, etc ...) qui résultent le plus souvent de la fabrication d'aimants du type TR/Co, la terre rare étant essentiellement le samarium ou TR/Fe/B, la terre rare étant essentiellement le néodyme et le pourcentage atomique des éléments étant généralement le suivant : de 8 à 30 % pour la terre rare ; de 2 à 28 % pour le bore et le complément en fer.

Comme mentionné ci-dessus, il est également possible de traiter selon le procédé de l'invention, les rejets d'exploitation des mines de fer contenant encore des oxydes de fer et de l'apatite. Dans pareil cas, il est souhaitable avant de mettre en oeuvre le procédé de l'invention, d'éliminer la magnétite, par séparation magnétique, technique bien connue dans le domaine considéré.

Le procédé convient également pour le traitement des résidus de dissolution de gypse, notamment des gypses issus de l'attaque sulfurique des minerais de phosphates, et les boues obtenues lors de l'étape de concentration des acides phosphoriques bruts.

La liste des minerais et résidus cités précédemment n'est en aucun cas limitative. Dans l'exposé qui suit de l'invention, on désignera par "minerai", aussi bien un minerai qu'un résidu contenant des terres rares.

Conformément au procédé de l'invention, on réalise dans l'étape (i) une attaque du minerai à l'aide d'acide sulfurique, par exemple par empâtage ou pulpage du minerai.

Avant l'attaque acide, une opération de concassage et/ou de broyage peut s'avérer intéressante afin de libérer l'espèce minérale porteuse des terres rares. La granulométrie dépend de la maille de libération qui peut varier entre quelques microns généralement 4 à 5 µm et 2 mm. Toutefois, si l'on désire une attaque assez rapide, il est avantageux de mettre en oeuvre des particules ayant un diamètre inférieur à 1 mm.

Les opérations de concassage et de broyage peuvent être conduites d'une manière classique, par exemple, dans un concasseur à mâchoires et/ou dans un broyeur à boulets ou à barres.

Outre les minéraux porteurs de terres rares, certains minéraux d'impuretés seront également attaqués par l'acide sulfurique. Toutefois, ces impuretés pourront être éliminées au cours du procédé ou dans une étape ultérieure.

L'attaque du minerai est effectuée par de l'acide sulfurique. Pour celle-ci, la concentration de l'acide sulfurique n'est pas critique. Ainsi, on peut utiliser un oléum comme une solution d'acide sulfurique. Dans ce dernier cas, la concentration des solutions d'acide sulfurique est avantageusement comprise entre 45 et 100 % en poids.

La quantité d'acide sulfurique utilisée est fonction de la teneur en terres rares du minerai et plus exactement de la teneur en espèces attaquables par l'acide sulfurique (terres rares et impuretés). Cette quantité est de préférence égale à la quantité stoechiométrique reguise pour attaquer les éléments attaquables.

Avantageusement, cette quantité pourra être supérieure à la quantité stoechiométrique requise, cet excès sera, de préférence de l'ordre de 20 %.

Pour améliorer le rendement de l'attaque acide, et notamment la cinétique de cette attaque, il est avantageux de la réaliser à une température supérieure à 100°C pour éliminer l'eau présente et ainsi déplacer l'équilibre, de préférence entre 100°C et 400°C.

D'autres avantages, détails et buts de l'invention apparaîtront plus clairement au vu des exemples donnés ci-dessous à titre indicatif et de la description détaillée d'un mode de réalisation préféré de l'invention faite en référence à la figure unique annexée qui représente un schéma synoptique d'un mode de réalisation préféré de l'invention.

Le procédé de l'invention dans un mode de réalisation préféré, consiste à réaliser dans un réacteur 1 l'empêtage sulfurique d'un minerai de terres rares par addition d'une solution d'acide sulfurique en 2.

Après réaction et attaque par l'acide sulfurique, on ajoute dans un réacteur 3, une solution d'un sel comprenant un cation formant un sulfate insoluble, et un anion formant avec les terres rares un sel soluble, par exemple une solution de nitrate de calcium. Cette addition est réalisée en 4.

Ainsi, dans le réacteur 3, les éléments terres rares sont solubilisés.

Les insolubles sont séparés en 5, par exemple par filtration, la phase aqueuse étant alors alimentée dans une batterie d'extraction liquide/liquide 6. Cette batterie comprend plusieurs étages du type mélangeur-décanteur fonctionnant à contre-courant et constituée d'une section d'extraction 6a et d'une section de re-extraction 6b des terres rares extraites dans la phase organique.

La phase organique est introduite dans la section d'extraction en 7 puis dans la section de re-extraction en 8 et est recyclé par la boucle 9.

La phase aqueuse introduite dans la section d'extraction en 10 est recyclée par la boucle 11 dans le

réacteur 3.

Cette boucle de recyclage 11 comprend une alimentation 12 permettant d'ajuster la teneur en calcium et nitrate par exemple, et une élimination des insolubles par filtration 13.

EXEMPLE 1

10 kilos de minerai de granulométrie moyenne inférieure ou égale à 100 µm et contenant 32,8 % de terres rares (exprimé en $TR_2O_3$) sont attaqués par 10 kg d'acide sulfurique à 62 % pendant deux heures à 200° C.

Après émottage de la masse d'attaque, celle-ci est reprise par 200 l d'une solution de nitrate de calcium 4M.

Le mélange ainsi obtenu est filtré. La solution filtrée est introduite dans une batterie d'extraction liquide-liquide fonctionnant à contre courant. La phase organique extractante est une solution de dibutylbutylphosphonate (DBBP) à 50 % dans du kérosène. Les valeurs de terres rares sont totalement extraites dans la phase organique puis reextraits de celle-ci et récupérées par une solution d'acide nitrique 0,05 N.

La solution de terres rares purifiée obtenue contient 44 g/l de terres rares (exprimé en $TR_2O_3$).

EXEMPLE 2

100 g de minerai contenant 32,8 % de terres rares (exprimé en $TR_2O_3$) sont attaqués par 100 g $H_2SO_4$ à 62 pendant 2 heures à 200° C.

Après émottage de la masse d'attaque, celle-ci est soumise à une lixiviation par un litre de solution de chlorure de calcium à 200 g/l. Après agitation, le pH de la masse réactionnelle est ajusté à 4,5. Les insolubles sont alors éliminés par filtration, la solution obtenue contenant 30 g/l de terres rares.

Cette solution est alimentée dans une batterie d'extraction liquide/liquide à contre-courant avec comme phase organique d'extraction une solution de HDEHP (acide di(éthyl 2-hexyl)phosphorique) dans du kérosène. La totalité des valeurs de terres rares est extraite dans la phase organique.

Les terres rares sont alors réextraites et récupérées par une solution d'acide nitrique 2N ou chlorhydrique 6N.

## Revendications

1. Procédé de traitement de minerais contenant des composés de terres rares caractérisé en ce qu'il consiste à :

(i) attaquer le minerai par de l'acide sulfurique

(ii) ajouter à la masse d'attaque, en présence d'eau, d'un composé comprenant un cation formant un sulfate insoluble et un anion formant avec les terres rares un sel soluble.

(iii) à récupérer les terres rares par extraction liquide/liquide entre la phase aqueuse contenant les sels de terres rares et une phase organique contenant un agent d'extraction des terres rares, insoluble dans l'eau, puis re-extraction des terres rares de la phase organique.

2. Procédé selon la revendication 1 caractérisé en ce que les insolubles sont séparés de la phase aqueuse avant l'étape (iii) précitée.

3. Procédé selon la revendication 1 ou 2 caractérisé en ce que le composé ajouté à l'étape (ii) est un nitrate ou un chlorure.

4. Procédé selon la revendication 1, 2 ou 3 caractérisé en ce que le composé ajouté à l'étape (ii) est un nitrate ou un chlorure d'alcalinoterreux tel que le nitrate de calcium, ou le chlorure de calcium.

5. Procédé selon l'une des revendications précédentes, caractérisé en ce que la quantité de composé ajouté à l'étape (ii) est suffisante pour avoir un rapport cation du composé/anion sulfate présent dans la masse de lixiviation au moins égal à la stoechiométrie.

6. Procédé selon l'une des revendications précédentes caractérisé en ce que l'étape (i) d'attaque est réalisée à une température supérieure à 100° C, de préférence comprise entre 100° C et 400° C.

7. Procédé selon l'une des revendications précédentes, caractérisé en ce que l'acide sulfurique utilisé pour l'étape (i) est une solution d'acide sulfurique de concentration comprise entre 45 et 100 %.

8. Procédé selon l'une des revendications 1 à 7, caractérisé en ce que l'acide sulfurique utilisé à l'étape (i) d'attaque est un oléum.

9. Procédé selon l'une des revendications précédentes, caractérisé en ce que la quantité d'acide sulfurique utilisé dans l'étape (i) est au moins égale à la quantité théorique requise pour attaquer les éléments attaquables du minerai.

10.Procédé selon la revendication 9, caractérisé en ce que la quantité d'acide sulfurique précité est supérieure de 20 % à la quantité théorique.

11.Procédé selon l'une des revendications précédentes, caractérisé en ce que le minerai est un minerai dont les porteurs de terres rares sont des phosphates, des fluocarbonates, des carbonates ou des silicates ou tout résidu contenant des terres rares sous forme salifiée ou métallique.

12.Procédé selon l'une des revendications précédentes caractérisé par le fait que le minerai mis en oeuvre est un minerai contenant de l'apatite ou un minerai contenant de la bastnaésite.

13.Procédé selon l'une des revendications précédentes caractérisé par le fait que le minerai mis en oeuvre est un résidu de fabrication d'aimants de type samarium/cobalt ou néodyme/fer/bore.

14.Procédé selon l'une des revendications précédentes caractérisé en ce que l'attaque du minerai est réalisée par empâtage du minerai avec de l'acide sulfurique.

15.Procédé selon l'une des revendications 1 à 15, caractérisé en ce que l'attaque du minerai est réalisée par pulpage du minerai avec de l'acide sulfurique.

16.Procédé selon l'une des revendications précédentes, caractérisé par le fait que l'agent d'extraction utilisé dans l'étape (iii) est un agent d'extraction anionique, solvatant ou cationique.

17.Procédé selon la revendication 16 caractérisé par le fait que l'agent d'extraction est un composé organophosphoré neurtre choisi parmi les phosphates, les phosphonates, les phosphinates, les oxydes de phosphine.

18.Procédé selon la revendication 17 caractérisé par le fait que l'agent d'extraction est le tributylphosphate ou le dibutylbutylphosphonate.

19.Procédé selon l'une des revendications 16 à 18 caractérisé par le fait que la phase organique contient un diluant qui est une coupe pétrolière de type kérosène ou un mélange d'alkylbenzènes.

20.Procédé selon l'une des revendications 16 à 19 caractérisé par le fait que l'on effectue un re-extraction des terres rares de la phase organique, à l'eau.

21.Procédé selon l'une des revendications précédentes, caractérisé en ce que la phase aqueuse épurée en terres rares est recyclée dans l'étape (ii).

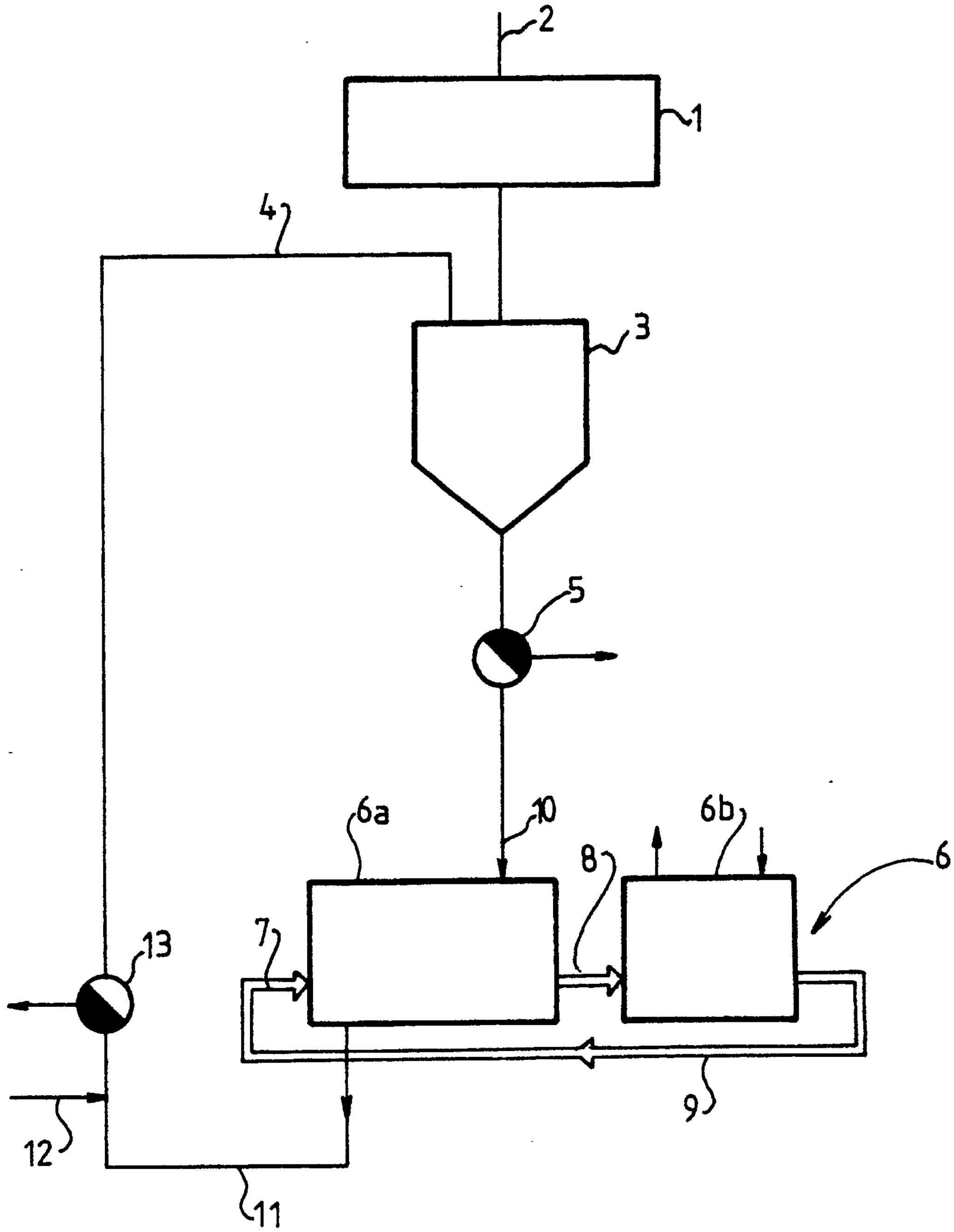
2
1
4
3
5
6a
10
6b
8
6
13
7
9
12
11

Office européen des brevets

# RAPPORT DE RECHERCHE EUROPEENNE

Numero de la demande

EP 90 40 2460

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 988 421 (W.P. KEMP)<br>* Revendications 1,3-9 * | 1-12 | C 22 B 59/00<br>C 01 F 17/00<br>C 22 B 3/26<br>C 22 B 3/28<br>C 22 B 3/32<br>C 22 B 3/38 |
| X | US-A-3 594 117 (V. CHIOLA)<br>* Revendications 1-6,10; colonne 3, alinéa 2 * | 1-2 | |
| X | US-A-4 670 228 (O. BRAATEN)<br>* Revendications; colonne 2 * | 1 | |
| A | US-A-3 947 542 (G. CHARLOT) | | |
| A | DD-A- 262 845 (VEB AGROCHEMIE PIESTERITZ) | | |
| | | | **DOMAINES TECHNIQUES RECHERCHES (Int. Cl.5)** |
| | | | C 22 B<br>C 01 F |

Le présent rapport a été établi pour toutes les revendications

| Lieu de la recherche | Date d'achèvement de la recherche | Examinateur |
|---|---|---|
| LA HAYE | 15-10-1990 | JACOBS J.J.E.G. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant